# EUROPEAN PATENT APPLICATION

(11) **EP 4 734 465 A1**
(43) Date of publication of application: **29.04.2026**
(21) Application number: 24844607.2
(22) Date of filing: 09.07.2024
(51) Int. Cl.: H04L 41/04

(54) **COMMUNICATION METHOD, COMMUNICATION APPARATUS AND COMMUNICATION SYSTEM**

(30) Priority: 25.07.2023 CN 202310919467
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Goddar, Heinz J.
(86) International application number: PCT/CN2024/104520
(87) International publication number: WO 2025/020913

(57) **Abstract**

This application provides a communication method, a communication apparatus, and a communication system. The method includes: A first network device determines a first model. The first network device sends first information related to the first model to a second network device, where the first network device is one of a central unit or a distributed unit, and the second network device is the other of the central unit or the distributed unit. The first network device may send the related information of the first model to the second network device, so that the second network device can apply the first model. This expands an application scope of the first model, and helps improve a capability of the second network device.

## Description

### CROSS-REFERENCE TO RELATED APPLICATIONS

This application claims priority to Chinese Patent Application No. 202310919467.5, filed with the China National Intellectual Property Administration on July 25, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

Artificial intelligence (artificial intelligence, AI) is a technology in which complex computing is performed by simulating a human brain. With improvement of data storage and computing capabilities, AI is increasingly used. The 3rd generation partnership project (3rd generation partnership project, 3GPP) proposes to apply AI to a wireless communication system, including application to a terminal device, a network device, and another device. During life cycle management (life cycle management, LCM) of an AI function, an AI model can be trained and/or optimized by intelligently collecting and analyzing data, to improve accuracy and a computing speed of AI model inference, and improve network performance and user experience.

However, how to expand an application scope of the AI model needs to be resolved.

### SUMMARY

This application provides a communication method, a communication apparatus, and a communication system, to expand an application scope of an AI model.

According to a first aspect, an embodiment of this application provides a communication method. The method may be performed by a first network device or an apparatus, for example, a chip, used in the first network device. That the first network device performs the method is used as an example. The method includes: The first network device determines a first model. The first network device sends first information related to the first model to a second network device, where the first network device is one of a central unit or a distributed unit, and the second network device is the other of the central unit or the distributed unit.

For example, the first model may be an AI model.

In the foregoing solution, the first network device may send the related information of the first model to the second network device, so that the second network device can apply the first model. This expands an application scope of the first model, and helps improve a capability of the second network device.

In a possible implementation method, that the first network device determines the first model includes: The first network device receives first indication information from the second network device. The first network device determines the first model based on the first indication information, where the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

In the foregoing solution, the first network device may accurately determine, based on the first indication information received from the second network device, the information about the model that needs to be sent to the second network device. This helps provide an appropriate model for the second network device.

In a possible implementation method, that the first network device determines the first model includes: The first network device receives a measurement result from a terminal device. The first network device determines the first model based on the measurement result.

In the foregoing solution, the first network device may accurately determine, based on the measurement result received from the terminal device, the information about the model that needs to be sent to the second network device. This helps provide an appropriate model for the second network device.

In a possible implementation method, that the first network device determines the first model includes: The first network device receives a request message from the second network device, where the request message includes information about at least one requested model. The first network device determines the first model based on the information about the at least one model.

In the foregoing solution, the first network device may accurately determine, based on the information about the at least one requested model received from the second network device, the information about the model that needs to be sent to the second network device. This helps provide an appropriate model for the second network device.

In a possible implementation method, the first information is included in control plane signaling.

In a possible implementation method, the first information includes one or more of the following: description information of the first model, update information of the first model, an available cell list of the first model, a forbidden cell list of the first model, activation time of the first model, deactivation time of the first model, fallback time of the first model, or information about a segment model of the first model.

In a possible implementation method, the method further includes: The first network device receives second indication information from the second network device, where the second indication information indicates at least one of the following information: completion of transmission of the first model, completion of transmission of the segment model of the first model, a segment model that is successfully received in the first model, a segment model that is not successfully received in the first model, or remaining storage space of the second network device.

In the foregoing solution, the first network device may determine a transmission status of the first model based on the second indication information. This helps implement correct transmission of the information about the first model.

In a possible implementation method, the method further includes: The first network device receives third indication information from the second network device, where the third indication information indicates at least one of the following: a usage status of the first model, a modification manner of the first model, or a modification reason of the first model.

In the foregoing solution, the first network device may receive feedback information of the second network device on the usage status of the first model. This helps the first network device determine whether to update the first model for the second network device.

In a possible implementation method, the method further includes: The first network device updates the first model based on the third indication information, to obtain second information related to the first model. The first network device sends the second information to the second network device.

In the foregoing solution, the first network device updates the first model for the second network device. This helps improve efficiency and accuracy of using the first model by the second network device.

In a possible implementation method, the method further includes: The first network device receives fourth indication information from the second network device, where the fourth indication information indicates to accept or reject application of the first model.

According to a second aspect, an embodiment of this application provides a communication method. The method may be performed by a second network device or an apparatus, for example, a chip, used in the second network device. That the second network device performs the method is used as an example. The method includes: The second network device receives first information related to a first model from a first network device. The second network device applies the first model based on the first information, where the first network device is one of a central unit or a distributed unit, and the second network device is the other of the central unit or the distributed unit.

In the foregoing solution, the first network device may send the related information of the first model to the second network device, so that the second network device can apply the first model. This expands an application scope of the first model, and helps improve a capability of the second network device.

In a possible implementation method, the method further includes: The second network device sends first indication information to the first network device, where the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

In the foregoing solution, the first network device may accurately determine, based on the first indication information received from the second network device, the information about the model that needs to be sent to the second network device. This helps provide an appropriate model for the second network device.

In a possible implementation method, the method further includes: The second network device sends a request message to the first network device, where the request message includes information about at least one requested model.

In the foregoing solution, the second network device provides the information about the at least one requested model, so that the first network device can accurately determine, based on the information about the at least one requested model received from the second network device, the information about the model that needs to be sent to the second network device. This helps provide an appropriate model for the second network device.

In a possible implementation method, the first information is included in control plane signaling.

In a possible implementation method, the first information includes one or more of the following: description information of the first model, update information of the first model, an available cell list of the first model, a forbidden cell list of the first model, activation time of the first model, deactivation time of the first model, fallback time of the first model, or information about a segment model of the first model.

In a possible implementation method, the method further includes: The second network device sends second indication information to the first network device, where the second indication information indicates at least one of the following information: completion of transmission of the first model, completion of transmission of the segment model of the first model, a segment model that is successfully received in the first model, a segment model that is not successfully received in the first model, or remaining storage space of the second network device.

In the foregoing solution, the first network device may determine a transmission status of the first model based on the second indication information. This helps implement correct transmission of the information about the first model.

In a possible implementation method, the method further includes: The second network device sends third indication information to the first network device, where the third indication information indicates at least one of the following: a usage status of the first model, a modification manner of the first model, or a modification reason of the first model.

In the foregoing solution, the first network device may receive feedback information of the second network device on the usage status of the first model. This helps the first network device determine whether to update the first model for the second network device.

In a possible implementation method, the method further includes: The second network device receives second information related to the first model from the first network device.

In the foregoing solution, the first network device updates the first model for the second network device. This helps the second network device better use the first model.

In a possible implementation method, the method further includes: The second network device sends fourth indication information to the first network device, where the fourth indication information indicates to accept or reject application of the first model.

According to a third aspect, an embodiment of this application provides a communication apparatus. The apparatus may be a first network device, or may be a module (for example, a chip) used in the first network device. The apparatus has a function of implementing any implementation method of the first aspect. The function may be implemented by hardware, or may be implemented by hardware by executing corresponding software. The hardware or the software includes one or more modules corresponding to the function.

According to a fourth aspect, an embodiment of this application provides a communication apparatus. The apparatus may be a second network device, or may be a module (for example, a chip) used in the second network device. The apparatus has a function of implementing any implementation method of the second aspect. The function may be implemented by hardware, or may be implemented by hardware by executing corresponding software. The hardware or the software includes one or more modules corresponding to the function.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect and the second aspect.

According to a sixth aspect, an embodiment of this application provides a communication apparatus, including a unit or a means (means) configured to perform steps of any implementation method of the first aspect and the second aspect.

According to a seventh aspect, an embodiment of this application provides a communication apparatus, including a processor and an interface circuit. The processor is configured to: communicate with another apparatus through the interface circuit, and perform any implementation method of the first aspect and the second aspect. There are one or more processors.

According to an eighth aspect, an embodiment of this application provides a communication apparatus, including a processor coupled to a memory. The processor is configured to invoke a program stored in the memory, to perform any implementation method of the first aspect and the second aspect. The memory may be located inside or outside the apparatus. In addition, there may be one or more processors.

According to a ninth aspect, an embodiment of this application further provides a computer-readable storage medium. The computer-readable storage medium stores instructions. When the instructions are run on a communication apparatus, any implementation method of the first aspect and the second aspect is performed.

According to a tenth aspect, an embodiment of this application further provides a computer program product. The computer program product includes a computer program or instructions. When the computer program or the instructions are run by a communication apparatus, any implementation method of the first aspect and the second aspect is performed.

According to an eleventh aspect, an embodiment of this application further provides a chip system, including a processor, configured to perform any implementation method of the first aspect and the second aspect.

According to a twelfth aspect, an embodiment of this application further provides a communication system, including a first network device configured to perform any implementation method of the first aspect and a second network device configured to perform any implementation method of the second aspect.

According to a thirteenth aspect, an embodiment of this application further provides a communication method, including: A first network device determines a first model. The first network device sends first information related to the first model to a second network device. The second network device applies the first model based on the first information, where the first network device is one of a central unit or a distributed unit, and the second network device is the other of the central unit or the distributed unit.

### BRIEF DESCRIPTION OF DRAWINGS

FIG. 1(a) is a diagram of an architecture of a communication system to which an embodiment of this application is applied;
FIG. 1(b) is a diagram of an access network device;
FIG. 1(c) is a diagram of a communication system according to an embodiment of this application;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5(a) is a schematic flowchart of a communication method according to an embodiment of this application;
FIG. 5(b) is a schematic flowchart of a communication method according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

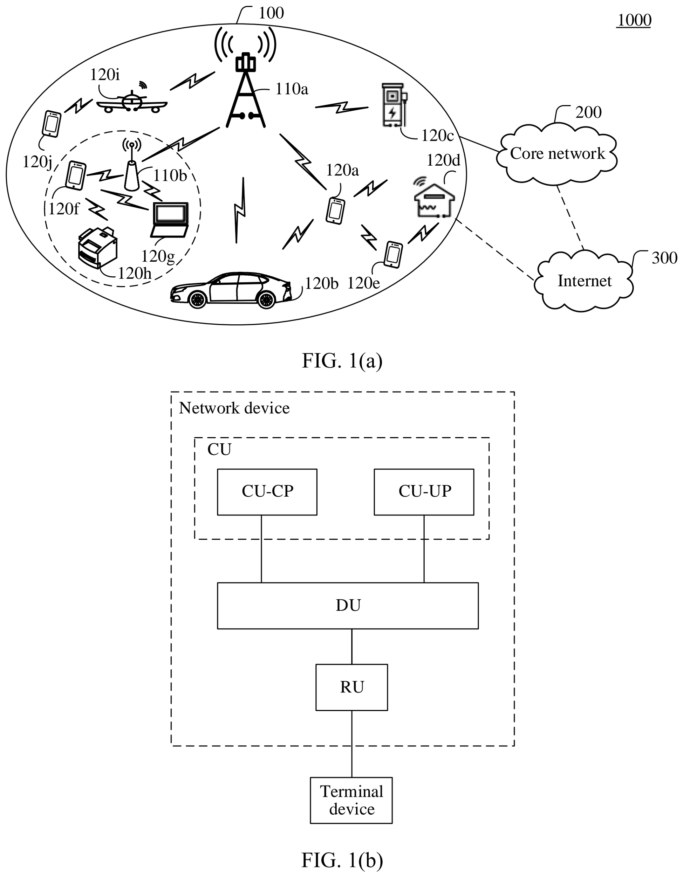

FIG. 1(a) is a diagram of an architecture of a communication system to which an embodiment of this application is applied. The communication system 1000 shown in FIG. 1(a) includes an access network 100 and a core network 200. For example, the communication system 1000 further includes an internet 300. The access network 100 may include at least one access network device (for example, 110a and 110b in FIG. 1(a)), and may further include at least one terminal device (for example, 120a to 120j in FIG. 1(a)). The terminal device is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or some functions of the core network device and some functions of the access network device may be integrated into one physical device. Terminal devices may be connected to each other in a wired or wireless manner, and access network devices may be connected to each other in a wired or wireless manner. FIG. 1(a) is only a diagram. The communication system may further include another access network device, for example, a wireless relay device and a wireless backhaul device, which are not shown in FIG. 1(a).

The access network device is an access device for the terminal device to access the communication system in a wired or wireless manner. The access network device may be a base station (base station), and includes, from example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a wireless fidelity (wireless fidelity, Wi-Fi) system. The access network device may alternatively be a module or a unit that completes some functions of a base station, for example, may be a central unit (central unit, CU), or may be a distributed unit (distributed unit, DU). The CU completes functions of a radio resource control protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The access network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the access network device are not limited in embodiments of this application.

The terminal device is a device that has a wireless transceiver function, and may send a signal to the access network device, or receive a signal from the access network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used by the terminal device are not limited in embodiments of this application.

The access network device or the terminal device may be at fixed locations, or may be movable. The access network device or the terminal device may be deployed on land, including an indoor or outdoor device, a handheld device, or a vehicle-mounted device; or may be deployed on a water surface; or may be deployed on a plane, a balloon, and an artificial satellite in the air. Application scenarios of the access network device and the terminal device are not limited in embodiments of this application.

Roles of the access network device and the terminal device may be relative. For example, a helicopter or an uncrewed aerial vehicle 120i in FIG. 1(a) may be configured as a mobile access network device. For the terminal device 120j that accesses the access network 100 through 120i, the terminal device 120i is an access network device. However, for the access network device 110a, 120i is a terminal device, that is, 110a and 120i communicate with each other by using a radio air interface protocol. Certainly, 110a and 120i may alternatively communicate with each other by using an interface protocol between access network devices. In this case, for 110a, 120i is also an access network device. Therefore, both the access network device and the terminal device may be collectively referred to as communication apparatuses. 110a and 110b in FIG. 1(a) may be referred to as communication apparatuses having a function of the access network device, and 120a to 120j in FIG. 1(a) may be referred to as communication apparatuses having a function of the terminal device.

Communication between an access network device and a terminal device, between access network devices, or between terminal devices may be performed by using a licensed spectrum, an unlicensed spectrum, or both a licensed spectrum and an unlicensed spectrum; and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, the functions of the access network device may alternatively be performed by a module (for example, a chip) in the access network device, or may alternatively be performed by a control subsystem including the functions of the access network device. The control subsystem including the functions of the access network device herein may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

In this application, the access network device sends a downlink signal or downlink information to the terminal device, and the downlink information is carried on a downlink channel. The terminal device sends an uplink signal or uplink information to the access network device, and the uplink information is carried on an uplink channel. To communicate with the access network device, the terminal device needs to establish a wireless connection with a cell controlled by the access network device. The cell that establishes the wireless connection with the terminal device is referred to as a serving cell of the terminal device.

The core network 200 includes one or more core network devices. A 5G core network is used as an example. The core network device includes but is not limited to one or more of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a binding support function (binding support function, BSF) network element, and a network data analytics function (network data analytics function, NWDAF) network element. The core network elements may work independently, or may be combined together to implement some control functions. For example, the AMF, the SMF, and the PCF may be combined together to serve as a core network device.

FIG. 1(b) is a diagram of an access network device. As shown in FIG. 1(b), the access network device includes one or more CUs, one or more DUs, and one or more radio units (radio units, RUs). For clarity, FIG. 1(b) shows only one CU, one DU, and one RU. The CU is configured to connect to a core network and the one or more DUs. For example, the CU may have some functions of the core network. The CU may include a CU-control plane (control plane, CP) and a CU-user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer), and the DU is configured to implement a function of a protocol layer (for example, a radio link control (radio link control, RLC) layer, a medium access control (medium access control, MAC) layer, and/or a physical (physical, PHY) layer) lower than the PDCP layer. For another example, the CU is configured to implement a function of a protocol layer (for example, an RRC layer and/or an SDAP layer) above a PDCP layer, and the DU is configured to implement functions of the PDCP layer and a lower protocol layer (for example, an RLC layer, a MAC layer, and/or a PHY layer).

For example, the CU-CP may further include a CU-CP 1 and a CU-CP 2. The CU-CP 1 is responsible for determining an interaction policy between the CU and the DU, and the CU-CP 2 is responsible for generating a specific control plane message.

The foregoing configuration of the CU and the DU is merely an example. Alternatively, functions of the CU and the DU may be configured as required. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on a delay. Functions whose processing time needs to meet a requirement of a small delay are set on the DU, and functions whose processing time does not need to meet the requirement of the delay are set on the CU.

The DU and the RU may cooperate to jointly implement functions of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include some functions of the physical layer, and the some functions are closer to the MAC layer. The lower-layer functions of the physical layer may include some other functions of the physical layer, and the some other functions are closer to an intermediate radio frequency side.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

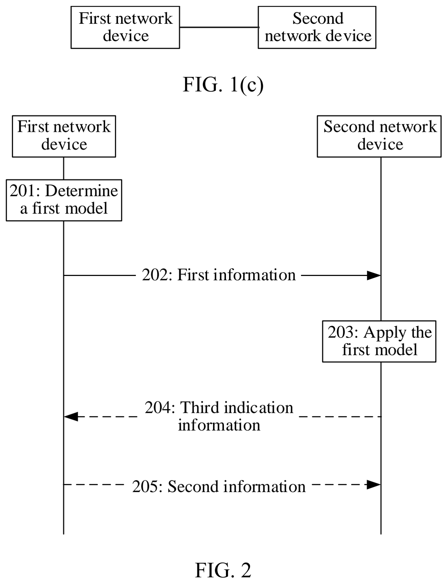

FIG. 1(c) is a diagram of a communication system according to an embodiment of this application. The communication system includes a first network device and a second network device. The first network device is one of a central unit or a distributed unit, and the second network device is the other of the central unit or the distributed unit. The central unit is a CU, a CU-CP, a CU-CP 1, an O-CU, an O-CU-CP, or an O-CU-CP 1, and the second network device is a DU or an O-DU. The first network device and the second network device correspond to a same access network device, for example, belong to a same base station. An interface between the first network device and the second network device may be an F1 interface, or may be another interface.

FIG. 2 is a schematic flowchart of a communication method according to an embodiment of this application. The method includes the following steps.

Step 201: A first network device determines a first model.

For example, the first model may be an AI model.

For example, the first network device may determine the first model in any one of the following manners:

Manner 1: The first network device receives first indication information from a second network device, and determines the first model based on the first indication information, where the first indication information indicates at least one of the following (1) to (9):

### (1) Information about a model supported by the second network device.

For example, if the second network device supports a model 1 and a model 2, or supports a model function, the first indication information may indicate information about the model 1 and/or the model 2, or indicate the model function.

A beam scanning enhancement scenario is used as an example. For example, the model function includes, for example, an optimal beam prediction function, and models that support the optimal beam prediction function include, for example, the model 1 and the model 2.

### (2) Information about a model configured by the second network device.

For example, if a model 1 and a model 2 have been configured on the second network device, the first indication information may indicate information about the model 1 and/or the model 2.

### (3) Information about a model expected by the second network device.

For example, if the second network device expects to configure a model 1 and a model 2, or expects to configure a model function, the first indication information may indicate information about the model 1 and/or the model 2, or indicate the model function.

In the foregoing (1) to (3), the information about the model includes at least one of a model identifier (ID), model version information, or model meta information.

The model meta information is description information of a specific model, and may include, for example, at least one of (a) to (k):
(a) Model input parameters, that is, parameters used as model input.
(b) Model output parameters, that is, parameters used as model output.
(c) Model version information, for example, a version number corresponding to the model.
(d) Model format information, that is, a format of the model.
   For example, the format of the model may include a private format and a format defined in a 3rd generation partnership project (3rd generation partnership project, 3GPP) standard. The private format is a model format implemented internally by vendors, and the specific format is invisible during transmission. The format defined in the 3GPP standard refers to a model format that is visible in a transmission process and whose model content may specifically correspond to 3GPP signaling.
(e) Model requirement, for example, a requirement of the model on a capability of the second network device.
(f) Identifier of an equipment vendor that can apply the model.
(g) Model application scenario (use case), for example, a channel state information-reference signal (channel state information-reference signal, CSI-RS) feedback enhancement scenario, a beam scanning enhancement scenario, a positioning enhancement scenario, an energy saving (energy saving) scenario, a load balancing (load balancing) scenario, or a mobility optimization (mobility optimization) scenario.
(h) Complexity of model calculation.
(i) Model function.
(j) Model size range.
(k) Model performance, for example, model prediction accuracy.

### (4) Model compilation format supported by the second network device.

For example, the compilation format may be a specific manner of model compilation, for example, compilation is performed in a programming manner, for example, Python or C++.

(5) Model application scenario supported by the second network device.

(6) Hardware resource information of the second network device, for example, current usage of a central processing unit (central processing unit, CPU), expected usage of the CPU, and a size of storage space that can be used to store model information.

(7) Model transmission mode expected by the second network device, which may be, for example, signaling-based transmission or bit stream-based transmission, and whether transmission by segment is required.

(8) Model update information expected by the second network device.

The model update information may be update information for a specific model, and may include an update of a model architecture, or may include an update of a model parameter. A fully-connected model is used as an example. The update of the model architecture includes, for example, an increase or a decrease of a quantity of model layers, or an adjustment of a quantity of nodes at each layer of the model, and the update of the model parameter includes, for example, an adjustment of a weight value between nodes.

(9) Status information of the second network device, which includes, for example, at least one of an uplink/downlink hardware load degree, physical resource block (physical resource block, PRB) utilization, an available channel resource capacity, an available slice (slice) capacity, or a quantity of activated terminal devices.

The PRB utilization includes PRB utilization of an uplink or a downlink guarantee bit rate (guarantee bit rate, GBR) and/or PRB utilization of a non-GBR. In addition, the PRB utilization may be PRB utilization of a synchronization signal block (synchronization signal block, SSB) level, a slice level, or a multiple-input multiple-output (multiple-input and multiple-output, MIMO) scenario of each cell.

That the model application scenario is the CSI-RS feedback enhancement scenario is used as an example. The first network device may determine, based on the information about the model expected by the second network device, the model application scenario supported by the second network device, and the hardware resource information of the second network device that are sent by the second network device, that the second network device may predict an optimal downlink weighting manner in the future by running a channel state information (channel state information, CSI) channel prediction model, to increase an air interface rate of the terminal device, and a resource status and a hardware capability of the second network device indicate that a CSI channel prediction model 1 is supported. In this case, the first network device may select to send information about the model 1 to the second network device.

Manner 2: The first network device receives a measurement result from a terminal device, and the first network device determines the first model based on the measurement result.

The measurement result may be reported by the terminal device to the first network device through an interface between the terminal device and the first network device, or may be reported by the terminal device to a second network device or another device through an interface between the terminal device and the second network device or the another device, and then sent by the second network device or the another device to the first network device. The second network device or the another device may process the measurement result and send the measurement result to the first network device, or may transparently transmit the measurement result to the first network device.

For example, the measurement result includes at least one of a signal quality/frequency measurement result of a cell-level/beam-level reference signal, location information of the terminal device, or a packet data convergence protocol (packet data convergence protocol, PDCP) layer delay of the terminal device. For example, when precision of the signal quality measurement result of the cell-level reference signal is greater than a first threshold and less than a second threshold, a model 1 is selected, or when the precision of the signal quality measurement result of the cell-level reference signal is greater than the second threshold, a model 2 is selected. A specific implementation of determining the model based on the measurement result is not limited in this embodiment of this application.

Manner 3: The first network device receives first indication information from a second network device, receives a measurement result from a terminal device, and determines the first model based on the first indication information and the measurement result.

For specific content of the first indication information and the measurement result, refer to the foregoing descriptions.

That a model application scenario is a beam scanning enhancement scenario is used as an example. The first network device determines, based on hardware resource information of the second network device, status information of the second network device, model update information expected by the second network device, and the measurement result of the terminal device, that the second network device may update a currently used optimal beam prediction model 2, to improve a success rate of predicting an optimal beam, and a resource status and a hardware capability of the second network device indicate that an update of the model 2 is supported. In this case, the first network device may select to send update information of the model 2 to the second network device.

Manner 4: The first network device receives a request message from a second network device, where the request message includes information about at least one requested model, and the first network device determines the first model based on the information about the at least one model.

The second network device may determine the at least one model based on a measurement result from a terminal device and/or information about the second network device. The at least one model may be understood as a model that the second network device expects to obtain or support application. The information about the second network device may be one or more pieces of information indicated by the first indication information. For the measurement result of the terminal device, refer to the foregoing descriptions.

After receiving the request message, the first network device determines the first model based on the information about the at least one model in the request message. The first model may be one of the at least one model, or may be a model other than the at least one model. For example, if the first network device determines that no model in the request message is applicable to the second network device, the first network device re-determines a model, that is, the first model, and the first model is applicable to the second network device.

That the first network device is a CU, and the second network device is a DU is used as an example. The request message may be sent by using at least one of the following signaling or newly defined signaling: an F1 interface setup request (F1setuprequest), a gNB-DU configuration update (gNB-DUconfigurationupdate), a gNB-CU configuration update acknowledgment (gNB-CUconfigurationupdateacknowledge), a gNB-CU configuration update failure (gNB-CUconfigurationupdatefailure), a resource status response (resourcestatusresponse), a resource status failure (resourcestatusfailure), or a resource status update (resourcestatusupdate).

That the first network device is a CU, and the second network device is a DU is used as an example. For Manner 1, 3, or 4, before step 201, the CU may further send notification information to the DU, where the notification information indicates to report the first indication information or the request message. The notification information may be sent by using at least one of the following signaling or newly defined signaling: an F1 interface setup failure (F1setupfailure), a gNB-DU configuration update acknowledgment (gNB-DUconfigurationupdateacknowledge), a gNB-DU configuration update failure (gNB-DUconfigurationupdatefailure), a gNB-CU configuration update (gNB-CUconfigurationupdate), or a resource status request (resourcestatusrequest).

Step 202: The first network device sends first information related to the first model to the second network device.

The first information may be included in control plane signaling. That the first network device is a CU, and the second network device is a DU is used as an example. The control plane signaling may be an F1 interface setup failure (F1setupfailure), a gNB-DU configuration update acknowledgment (gNB-DUconfigurationupdateacknowledge), a gNB-DU configuration update failure (gNB-DUconfigurationupdatefailure), a gNB-CU configuration update (gNB-CUconfigurationupdate), or a resource status request (resourcestatusrequest).

The first network device may send the first information to the second network device in a signaling-based transmission mode or a bit stream-based transmission mode.

The first information includes at least identification information of the first model, and the identification information may be an index (index) or an identifier (ID). For example, the first information further includes one or more of the following:
(1) Description information of the first model.
   The description information is information about the model, for example, layer (layer) information and node information. The layer information is used to describe a quantity of layers in the first model, a type of the layer, and the like. The node information is used to describe a connection relationship between nodes at each layer.
(2) Update information of the first model.
   The update information of the first model is some updated information in the description information of the first model.
(3) Available cell (cell) list of the first model.
   That is, a list of cells that can use the first model.
(4) Forbidden cell list of the first model.
   That is, a list of cells that are forbidden to use the first model.
(5) Activation time of the first model.
   The activation time is time when the model is enabled or used.
(6) Deactivation time of the first model.
   The deactivation time is time when the model is suspended.
(7) Fallback (fallback) time of the first model.
   The fallback time is time when the model is disabled.
(8) Information about a segment model of the first model.

The information about the segment model is information about each segment when the first model needs to be transmitted by segment, for example, including at least one of a segment number, a home model, information about a segment model, a segment size, a quantity of remaining segments, and whether the segment is a start/end segment. The start segment is also referred to as a first segment, and the end segment is also referred to as a last segment.

For example, the model 1 is divided into three segments for transmission. Therefore, the model 1 is divided into three segment models. Information about a segment model 1 includes a segment number #1, an ID of the model 1, description information used to describe the segment model 1, a segment size of 100 kilobits (KB), indication information indicating that a quantity of remaining segments is 2, and indication information indicating that the segment model 1 is a start segment. Information about a segment model 2 includes a segment number #2, an ID of the model 1, description information used to describe the segment model 2, a segment size of 150 KB, and indication information indicating that a quantity of remaining segments is 1. Information about a segment model 3 includes a segment number #3, an ID of the model 1, description information used to describe the segment model 3, a segment size of 100 KB, indication information indicating that a quantity of remaining segments is 0, and indication information indicating that the segment model 3 is an end segment.

For example, after step 202, the second network device may send second indication information to the first network device, where the second indication information indicates a status of receiving the first model. For example, when the first information indicates the description information of the first model, the second indication information may indicate completion of transmission of the first model, so that the first network device learns that transmission of the description information of the first model is completed or succeeds. For another example, when the first information indicates the information about the segment model of the first model, the second indication information may indicate at least one of the following information: completion of transmission of the segment model of the first model, a segment model that is successfully received in the first model, a segment model that is not successfully received in the first model, or remaining storage space of the second network device. For example, in the foregoing example, the model 1 is divided into three segments for transmission. When receiving the segment model 1, the second network device sends one piece of second indication information, to indicate that the segment model 1 is successfully received and the remaining storage space is 1000 KB. When receiving the segment model 2, the second network device sends one piece of second indication information, to indicate that the segment model 2 is successfully received and the remaining storage space is 850 KB. When receiving the segment model 3, the second network device sends one piece of second indication information, to indicate that the segment model 3 is successfully received, transmission of the first model is completed, and the remaining storage space is 750 KB.

Step 203: The second network device applies the first model based on the first information.

The applying the first model herein may be configuring the first model on the second network device, or configuring and using the first model, or updating the first model, or updating and using the first model.

In the foregoing solution, the first network device may send the related information of the first model to the second network device, so that the second network device can apply the first model. This expands an application scope of the first model, and helps improve a capability of the second network device.

In an implementation of this application, after step 203, the following step 204 is further included.

Step 204: The second network device sends third indication information to the first network device. Correspondingly, the first network device receives the third indication information.

The third indication information indicates at least one of the following: a usage status of the first model, a modification manner of the first model, or a modification reason of the first model.

The usage status of the first model includes, for example, information that reflects usage status of the first model in different model application scenarios, such as optimal beam prediction accuracy, CSI prediction accuracy, an optimal beam selection rate, a throughput improvement rate, or positioning accuracy, obtained after the first model is used, or software and hardware performance of the second network device after the first model is used.

The modification manner of the first model includes, for example, activating the model, deactivating the model, switching the model, or updating the model. The activating the model may mean that the second network device notifies the first network device after starting or using the first model, or mean that the second network device requests the first network device to activate the first model. The deactivating the model may mean that the second network device notifies the first network device after stopping using the first model, or mean that the second network device requests the first network device to deactivate the first model. The switching the model means that the second network device notifies the first network device after switching the activated first model to another model, or requests the first network device to switch the activated first model to another model. The updating the model is requesting the first network device to adjust a parameter, an architecture, and the like of the first model.

It should be noted that, in addition to the foregoing manner of activating/deactivating the model, alternatively, the first network device may indicate the second network device to activate/deactivate the model, and then the second network device activates/deactivates the model based on the indication of the first network device. In other words, the second network device does not need to request the first network device to activate/deactivate the model, but the first network device actively indicates the second network device to activate/deactivate the model.

The modification reason of the first model includes, for example, a performance reason (for example, performance of the first model cannot meet a requirement of the second network device, for example, the optimal beam prediction accuracy of the first model is insufficient, or the CSI prediction accuracy is insufficient) and a hardware reason (for example, the hardware performance of the second network device cannot support the first model or can support a model with better performance).

For example, the third indication information may further indicate at least one of the following: a usage status of a second model, a modification manner of the second model, or a modification reason of the second model. The second model is any one or more models other than the first model. Specific meanings and implementations of the usage status of the second model, the modification manner of the second model, and the modification reason of the second model are similar to those of the usage status of the first model, the modification manner of the first model, and the modification reason of the first model. For details, refer to the foregoing descriptions. The third indication information indicates at least one of the usage status of the first model, the modification manner of the first model, or the modification reason of the first model, and further indicates the usage status of the second model, the modification manner of the second model, or the modification reason of the second model. In this way, related statuses of a plurality of models can be indicated in one piece of indication information, thereby reducing signaling overheads.

For example, the third indication information may further indicate model rollback. The model rollback means that the second network device exits one or some AI functions, and therefore the second network device cannot use a model having the AI function, for example, the first model or the second model. Alternatively, the model rollback means that the second network device exits all AI functions, and therefore the second network device cannot use any AI model.

For example, after step 204, the following step 205 is further included.

Step 205: The first network device sends second information related to the first model to the second network device. Correspondingly, the second network device receives the second information.

For example, the first network device updates the first model based on the third indication information, to obtain the second information related to the updated first model, and sends the second information to the second network device.

An implementation method of the second information is similar to that of the first information. For details, refer to the foregoing descriptions. Details are not described again.

In an implementation method, after step 202, the second network device may send fourth indication information to the first network device, where the fourth indication information indicates that application of the first model is accepted. Alternatively, if the second network device rejects to apply the first model, the fourth indication information may indicate that application of the first model is rejected, and correspondingly, step 203 to step 205 do not need to be performed. Optionally, the fourth indication information may further indicate a rejection reason, for example, hardware of the second network device does not support the application of the first model, or the performance of the first model does not meet a requirement.

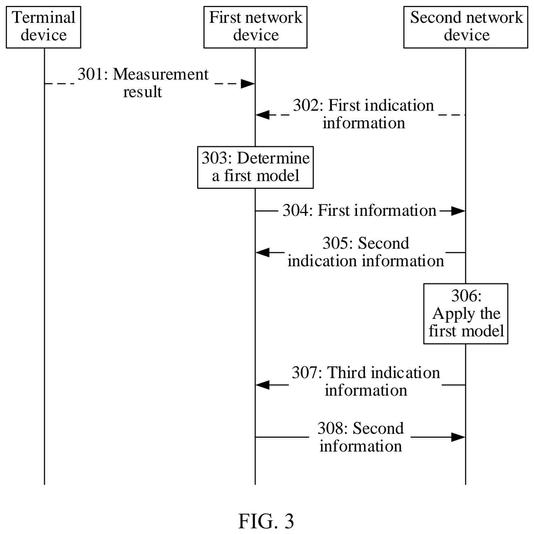

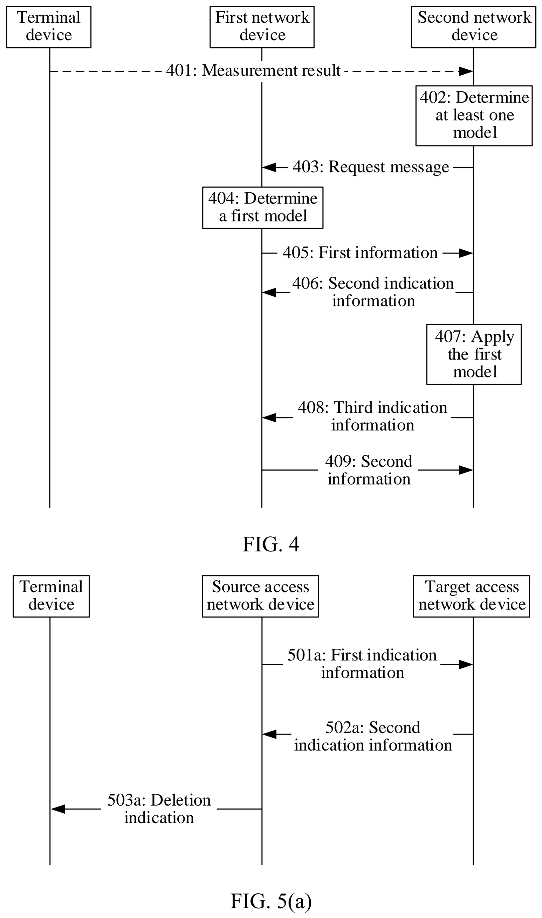

The following describes two specific embodiments of the embodiment in FIG. 2 with reference to FIG. 3 and FIG. 4. In the following embodiment in FIG. 3, the first network device determines the first model based on Manner 1, Manner 2, or Manner 3 in step 201 in the embodiment in FIG. 2. In the following embodiment in FIG. 4, the first network device determines the first model based on Manner 4 in step 201 in the embodiment in FIG. 2.

FIG. 3 is a schematic flowchart of a communication method according to an embodiment of this application. The method includes the following steps.

Step 301: A terminal device sends a measurement result to a first network device. Correspondingly, the first network device receives the measurement result.

For specific content of the measurement result, refer to related descriptions in the embodiment in FIG. 2.

Step 302: A second network device sends first indication information to the first network device. Correspondingly, the first network device receives the first indication information.

For specific content of the first indication information, refer to related descriptions in the embodiment in FIG. 2.

Both step 301 and step 302 are optional steps. For example, only step 301 is performed, or only step 302 is performed, or step 301 and step 302 are performed.

Step 303: The first network device determines a first model.

This step is the same as Manner 1, Manner 2, or Manner 3 in step 201 in the embodiment in FIG. 2. Refer to the foregoing descriptions.

Step 304: The first network device sends first information related to the first model to the second network device. Correspondingly, the second network device receives the first information.

This step is the same as step 202 in the embodiment in FIG. 2. Refer to the foregoing descriptions.

Step 305: The second network device sends second indication information to the first network device. Correspondingly, the first network device receives the second indication information.

The second indication information indicates a status of receiving the first model by the second network device. For details, refer to related descriptions in the embodiment in FIG. 2.

Step 306: The second network device applies the first model.

The applying the first model herein may be configuring the first model on the second network device, or configuring and using the first model, or updating the first model, or updating and using the first model.

Step 307: The second network device sends third indication information to the first network device. Correspondingly, the first network device receives the third indication information.

This step is the same as step 204 in the embodiment in FIG. 2. Refer to the foregoing descriptions.

Step 308: The first network device sends second information related to the first model to the second network device. Correspondingly, the second network device receives the second information.

This step is the same as step 205 in the embodiment in FIG. 2. Refer to the foregoing descriptions.

In the foregoing solution, the first network device may send the related information of the first model to the second network device, so that the second network device can apply the first model. This expands an application scope of the first model, and helps improve a capability of the second network device. In addition, in this solution, the first network device determines the first model based on the first indication information from the second network device and/or the measurement result from the terminal device, and the second network device needs to report only the first indication information, so that energy consumption of the second network device can be reduced.

FIG. 4 is a schematic flowchart of a communication method according to an embodiment of this application. The method includes the following steps.

Step 401: A terminal device sends a measurement result to a second network device. Correspondingly, the second network device receives the measurement result.

For specific content of the measurement result, refer to related descriptions in the embodiment in FIG. 2.

This step is an optional step.

Step 402: The second network device determines at least one model.

The second network device may determine the at least one model based on the measurement result from the terminal device and/or information about the second network device. The at least one model may be understood as a model that the second network device expects to obtain or support application. The information about the second network device may be one or more pieces of information indicated by the first indication information in the embodiment in FIG. 2.

Step 403: The second network device sends a request message to a first network device. Correspondingly, the first network device receives the request message.

For specific content of the request message, refer to related descriptions in Method 4 in step 201 in the embodiment in FIG. 2.

Step 404: The first network device determines a first model.

This step is the same as Method 4 in step 201 in the embodiment in FIG. 2. Refer to the foregoing descriptions.

Step 405 to step 409 are the same as step 304 to step 308 in the embodiment in FIG. 3.

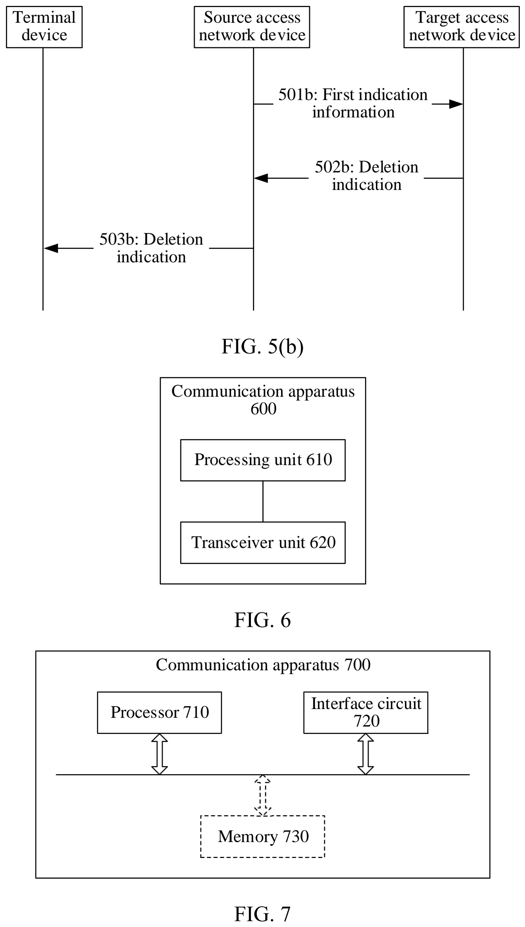

In the foregoing solution, the first network device may send related information of the first model to the second network device, so that the second network device can apply the first model. This expands an application scope of the first model, and helps improve a capability of the second network device. In addition, in this solution, the second network device determines information about the at least one model based on related information of the second network device and/or the measurement result from the terminal device, and sends, to the first network device, the request message that carries the information about the at least one model, so that the first network device determines the first model based on the request message. Because the second network device has performed preliminary screening for model selection, a speed of determining the first model by the first network device can be accelerated, and energy consumption of the first network device can be reduced. Currently, in a process of downloading information about the first model from an access network device, the terminal device may be handed over. If the terminal device cannot continue to download remaining model information that is of the first model and that is not completely transmitted after being handed over to a target access network device, some information about the first model that has been downloaded by the terminal device from the source access network device cannot be used, and the some information still occupies storage space of the terminal device, causing a waste of storage resources. To resolve this problem, embodiments of this application provide the following two embodiments in FIG. 5(a) and FIG. 5(b).

FIG. 5(a) is a schematic flowchart of a communication method according to an embodiment of this application. The method includes the following steps.

Step 501a: A source (source) access network device sends first indication information to a target access network device. Correspondingly, the target (target) access network device receives the first indication information.

The first indication information may be carried in a handover request (handoverrequest) message.

Specifically, before a terminal device is handed over from the source access network device to the target access network device, the source access network device sends the first indication information to the target access network device.

The first indication information indicates progress of downloading a first model by the terminal device from the source access network device. For example, the first indication information includes identification information of the first model and download progress information. The download progress information may be a size of bits that have been downloaded. For example, a size of the first model is 80 KB, and the download progress information indicates that 40 KB has been downloaded. Alternatively, when the first model is transmitted by segment, the download progress information may be a quantity of segment models that have been downloaded. For example, the first model is divided into 10 segments, and the download progress information indicates that four segments have been downloaded.

Step 502a: The target access network device sends second indication information to the source access network device. Correspondingly, the source access network device receives the second indication information.

The target access network device receives the first indication information, and sends the second indication information to the source access network device if determining that remaining model information that is of the first model and that is not transmitted cannot continue to be transmitted to the terminal device after the terminal device is handed over. A reason why the transmission cannot continue may be that the target access network device does not store the information about the first model, or the terminal device has no permission to obtain the information about the first model from the target access network device.

The second indication information indicates that the target access network device cannot transmit the remaining model information that is of the first model and that is not transmitted to the terminal device.

For example, the second indication information may be carried in a handover request acknowledgment (handoverrequestacknowledge) message.

Step 503a: The source access network device sends a deletion indication to the terminal device. Correspondingly, the terminal device receives the deletion indication.

The deletion indication indicates the terminal device to delete the information about the first model that has been downloaded from the source access network device.

For example, the deletion indication is carried in an RRC reconfiguration message.

In the foregoing solution, the terminal device is handed over when downloading the information about the first model from the source access network device. If the terminal device cannot continue to download the remaining model information that is of the first model and that is not completely transmitted after being handed over to the target access network device, the terminal device deletes the information about the first model that has been downloaded from the source access network device, thereby avoiding a waste of storage resources. In addition, in this solution, the source access network device determines that the terminal device needs to delete the information about the first model that has been downloaded from the source access network device, and the source access network device sends the deletion indication to the terminal device, to indicate the terminal device to delete the information about the first model that has been downloaded from the source access network device.

FIG. 5(b) is a schematic flowchart of a communication method according to an embodiment of this application. The method includes the following steps.

Step 501b: A source access network device sends first indication information to a target access network device. Correspondingly, the target access network device receives the first indication information.

The first indication information may be carried in a handover request message.

Specifically, before a terminal device is handed over from the source access network device to the target access network device, the source access network device sends the first indication information to the target access network device.

The first indication information indicates progress of downloading a first model by the terminal device from the source access network device, and further indicates the target access network device to determine whether to indicate the terminal device to delete information about the first model that has been downloaded from the source access network device.

For a manner of indicating the download progress of the first model, refer to the descriptions in the embodiment in FIG. 5(a). Details are not described again.

Step 502b: The target access network device sends a deletion indication to the source access network device. Correspondingly, the source access network device receives the deletion indication.

The target access network device receives the first indication information, and sends the deletion indication to the source access network device if determining that remaining model information that is of the first model and that is not transmitted cannot continue to be transmitted to the terminal device after the terminal device is handed over. The deletion indication indicates the terminal device to delete the information about the first model that has been downloaded from the source access network device. A reason why the transmission cannot continue may be that the target access network device does not store the information about the first model, or the terminal device has no permission to obtain the information about the first model from the target access network device.

For example, the deletion indication may be carried in an RRC container (RRCContainer) in a handover request acknowledgment (handoverrequestacknowledge) message. The source access network device transparently transmits the RRC container to the terminal device.

Step 503b: The source access network device sends the deletion indication to the terminal device. Correspondingly, the terminal device receives the deletion indication.

For example, the deletion indication is carried in an RRC container, and the RRC container is carried in an RRC reconfiguration message.

In the foregoing solution, the terminal device is handed over when downloading the information about the first model from the source access network device. If the terminal device cannot continue to download the remaining model information that is of the first model and that is not completely transmitted after being handed over to the target access network device, the terminal device deletes the information about the first model that has been downloaded from the source access network device, thereby avoiding a waste of storage resources. In addition, in this solution, the target access network device determines that the terminal device needs to delete the information about the first model that has been downloaded from the source access network device, the target access network device sends the deletion indication to the source access network device, and the source access network device transparently transmits the deletion indication to the terminal device, to indicate the terminal device to delete the information about the first model that has been downloaded from the source access network device.

In embodiments of this application, the first network device, the second network device, and/or the terminal device may perform some or all of steps in embodiments of this application. These steps or operations are merely examples, and other operations or variants of various operations may be further performed in embodiments of this application. In addition, the steps may be performed in a sequence different from that presented in embodiments of this application, and not all the operations in embodiments of this application may be performed.

To implement functions in the foregoing embodiments, the first network device, the second network device, or the terminal device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

FIG. 6 and FIG. 7 are diagrams of structures of possible communication apparatuses according to embodiments of this application. These communication apparatuses may be configured to implement a function of the first network device, the second network device, or the terminal device in the foregoing method embodiments, and therefore can also achieve beneficial effects of the foregoing method embodiments. In embodiments of this application, the communication apparatus may be the first network device, the second network device, or the terminal device, or may be a module (for example, a chip) used in the first network device, the second network device, or the terminal device.

As shown in FIG. 6, the communication apparatus 600 includes a processing unit 610 and a transceiver unit 620. The communication apparatus 600 is configured to implement functions of the first network device, the second network device, and the terminal device in the foregoing method embodiments.

When the communication apparatus 600 is configured to implement a function of the first network device in the foregoing embodiments, the processing unit 610 is configured to determine a first model. The transceiver unit 620 is configured to send first information related to the first model to a second network device, where the first network device is one of a central unit or a distributed unit, and the second network device is the other of the central unit or the distributed unit.

In a possible implementation method, that the processing unit 610 is configured to determine the first model specifically includes: receiving first indication information from the second network device by using the transceiver unit 620; and determining the first model based on the first indication information, where the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

In a possible implementation method, that the processing unit 610 is configured to determine the first model specifically includes: receiving a measurement result from a terminal device by using the transceiver unit 620; and determining the first model based on the measurement result.

In a possible implementation method, that the processing unit 610 is configured to determine the first model specifically includes: receiving a request message from the second network device by using the transceiver unit 620, where the request message includes information about at least one requested model; and determining the first model based on the information about the at least one model.

In a possible implementation method, the transceiver unit 620 is further configured to receive second indication information from the second network device, where the second indication information indicates at least one of the following information: completion of transmission of the first model, completion of transmission of the segment model of the first model, a segment model that is successfully received in the first model, a segment model that is not successfully received in the first model, or remaining storage space of the second network device.

In a possible implementation method, the transceiver unit 620 is further configured to receive third indication information from the second network device, where the third indication information indicates at least one of the following: a usage status of the first model, a modification manner of the first model, or a modification reason of the first model.

In a possible implementation method, the processing unit 610 is further configured to update the first model based on the third indication information, to obtain second information related to the first model. The transceiver unit 620 is further configured to send the second information to the second network device.

In a possible implementation method, the transceiver unit 620 is further configured to receive fourth indication information from the second network device, where the fourth indication information indicates to accept or reject application of the first model.

When the communication apparatus 600 is configured to implement a function of the second network device in the foregoing embodiments, the transceiver unit 620 is configured to receive first information related to a first model from a first network device. The processing unit 610 is configured to apply the first model based on the first information, where the first network device is one of a central unit or a distributed unit, and the second network device is the other of the central unit or the distributed unit.

In a possible implementation method, the transceiver unit 620 is further configured to send first indication information to the first network device, where the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

In a possible implementation method, the transceiver unit 620 is further configured to send a request message to the first network device, where the request message includes information about at least one requested model.

In a possible implementation method, the transceiver unit 620 is further configured to send second indication information to the first network device, where the second indication information indicates at least one of the following information: completion of transmission of the first model, completion of transmission of the segment model of the first model, a segment model that is successfully received in the first model, a segment model that is not successfully received in the first model, or remaining storage space of the second network device.

In a possible implementation method, the transceiver unit 620 is further configured to send third indication information to the first network device, where the third indication information indicates at least one of the following: a usage status of the first model, a modification manner of the first model, or a modification reason of the first model.

In a possible implementation method, the transceiver unit 620 is further configured to receive second information related to the first model from the first network device.

In a possible implementation method, the transceiver unit 620 is further configured to send fourth indication information to the first network device, where the fourth indication information indicates to accept or reject application of the first model.

For more detailed descriptions of the processing unit 610 and the transceiver unit 620, directly refer to related descriptions in the foregoing method embodiments. Details are not described herein again.

As shown in FIG. 7, the communication apparatus 700 includes a processor 710 and an interface circuit 720. The processor 710 and the interface circuit 720 are coupled to each other. It may be understood that the interface circuit 720 may be a transceiver or an input/output interface. For example, the communication apparatus 700 may further include a memory 730, configured to store instructions executed by the processor 710, store input data required by the processor 710 to run the instructions, or store data generated after the processor 710 runs the instructions.

When the communication apparatus 700 is configured to implement the foregoing method embodiments, the processor 710 is configured to implement a function of the processing unit 610, and the interface circuit 720 is configured to implement a function of the transceiver unit 620.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device; or the chip in the terminal device sends information to another module (for example, a radio frequency module or an antenna) in the terminal device, where the information is sent by the terminal device to a network device.

When the communication apparatus is a module used in the network device, the module in the network device implements a function of the network device in the foregoing method embodiments. The module in the network device receives information from another module (for example, a radio frequency module or an antenna) in the network device, where the information is sent by the terminal device to the network device; or the module in the network device sends information to another module (for example, a radio frequency module or an antenna) in the network device, where the information is sent by the network device to the terminal device.

It may be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in the ASIC. In addition, the ASIC may be located in the network device or the terminal device. Certainly, the processor and the storage medium may alternatively exist as discrete components in the network device or the terminal device.

All or some of the foregoing embodiments may be implemented by using software, hardware, firmware, or any combination thereof. When the software is used for implementation, all or some of embodiments may be implemented in a form of a computer program product. The computer program product includes one or more computer programs or instructions. The computer program (Computer Program) is a set of instructions that instruct each step of an electronic computer or another device having a message processing capability, is usually written in a program design language, and is run in a target architecture. When the computer programs or the instructions are loaded and executed on a computer, all or some of the procedures or functions in embodiments of this application are executed. The computer may be a general-purpose computer, a dedicated computer, a computer network, a network device, a terminal device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

The protocol in this application may be a communication protocol or a specification, for example, a 3GPP communication protocol.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device, the network device, or the second network device may perform some or all of steps in embodiments of this application. These steps or operations are merely examples, and other operations or variants of various operations may be further performed in embodiments of this application. In addition, the steps may be performed in a sequence different from that presented in embodiments of this application, and not all the operations in embodiments of this application may be performed.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, by a first network device, a first model; and
sending, by the first network device, first information related to the first model to a second network device, wherein
the first network device is one of a central unit or a distributed unit, and the second network device is the other of the central unit or the distributed unit.

2. The method according to claim 1, wherein the determining, by the first network device, the first model comprises:
receiving, by the first network device, first indication information from the second network device; and
determining, by the first network device, the first model based on the first indication information, wherein
the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

3. The method according to claim 1, wherein the determining, by the first network device, the first model comprises:
receiving, by the first network device, a measurement result from a terminal device; and
determining, by the first network device, the first model based on the measurement result.

4. The method according to claim 1, wherein the determining, by the first network device, the first model comprises:
receiving, by the first network device, a request message from the second network device, wherein the request message comprises information about at least one requested model; and
determining, by the first network device, the first model based on the information about the at least one model.

5. The method according to any one of claims 1 to 4, wherein the first information is comprised in control plane signaling.

6. The method according to any one of claims 1 to 5, wherein the first information comprises one or more of the following:
description information of the first model, update information of the first model, an available cell list of the first model, a forbidden cell list of the first model, activation time of the first model, deactivation time of the first model, fallback time of the first model, or information about a segment model of the first model.

7. The method according to any one of claims 1 to 6, wherein the method further comprises:
receiving, by the first network device, second indication information from the second network device, wherein the second indication information indicates at least one of the following information: completion of transmission of the first model, completion of transmission of the segment model of the first model, a segment model that is successfully received in the first model, a segment model that is not successfully received in the first model, or remaining storage space of the second network device.

8. The method according to any one of claims 1 to 7, wherein the method further comprises:
receiving, by the first network device, third indication information from the second network device, wherein the third indication information indicates at least one of the following: a usage status of the first model, a modification manner of the first model, or a modification reason of the first model.

9. The method according to claim 8, wherein the method further comprises:
updating, by the first network device, the first model based on the third indication information, to obtain second information related to the first model; and
sending, by the first network device, the second information to the second network device.

10. The method according to any one of claims 1 to 7, wherein the method further comprises:
receiving, by the first network device, fourth indication information from the second network device, wherein the fourth indication information indicates to accept or reject application of the first model.

11. A communication method, comprising:
receiving, by a second network device, first information related to a first model from a first network device; and
applying, by the second network device, the first model based on the first information, wherein
the first network device is one of a central unit or a distributed unit, and the second network device is the other of the central unit or the distributed unit.

12. The method according to claim 11, wherein the method further comprises:
sending, by the second network device, first indication information to the first network device, wherein
the first indication information indicates at least one of the following: information about a model supported, configured, or expected by the second network device, a model compilation format supported by the second network device, a model application scenario supported by the second network device, hardware resource information of the second network device, a model transmission mode expected by the second network device, or model update information expected by the second network device.

13. The method according to claim 11, wherein the method further comprises:
sending, by the second network device, a request message to the first network device, wherein the request message comprises information about at least one requested model.

14. The method according to any one of claims 11 to 13, wherein the first information is comprised in control plane signaling.

15. The method according to any one of claims 11 to 14, wherein the first information comprises one or more of the following:
description information of the first model, update information of the first model, an available cell list of the first model, a forbidden cell list of the first model, activation time of the first model, deactivation time of the first model, fallback time of the first model, or information about a segment model of the first model.

16. The method according to any one of claims 11 to 15, wherein the method further comprises:
sending, by the second network device, second indication information to the first network device, wherein the second indication information indicates at least one of the following information: completion of transmission of the first model, completion of transmission of the segment model of the first model, a segment model that is successfully received in the first model, a segment model that is not successfully received in the first model, or remaining storage space of the second network device.

17. The method according to any one of claims 11 to 16, wherein the method further comprises:
sending, by the second network device, third indication information to the first network device, wherein the third indication information indicates at least one of the following: a usage status of the first model, a modification manner of the first model, or a modification reason of the first model.

18. The method according to claim 17, wherein the method further comprises:
receiving, by the second network device, second information related to the first model from the first network device.

19. The method according to any one of claims 11 to 16, wherein the method further comprises:
sending, by the second network device, fourth indication information to the first network device, wherein the fourth indication information indicates to accept or reject application of the first model.

20. A communication apparatus, comprising a module configured to perform the method according to any one of claims 1 to 10 or the method according to any one of claims 11 to 19.

21. A communication apparatus, comprising a processor coupled to a memory, wherein the processor is configured to invoke a program stored in the memory, to perform the method according to any one of claims 1 to 10, or perform the method according to any one of claims 11 to 19.

22. A communication apparatus, comprising a processor and a memory, wherein the memory is configured to store computer instructions, and when the communication apparatus runs, the processor executes the computer instructions stored in the memory, to perform the method according to any one of claims 1 to 10, or perform the method according to any one of claims 11 to 19.

23. A communication apparatus, comprising a processor and an interface circuit, wherein the processor is configured to: communicate with another apparatus through the interface circuit, and perform the method according to any one of claims 1 to 10, or perform the method according to any one of claims 11 to 19.

24. A computer program product, wherein the computer program product comprises a computer program or instructions, and when the computer program or the instructions are run on a processor, the processor is enabled to perform the method according to any one of claims 1 to 10, or perform the method according to any one of claims 11 to 19.

25. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 19 is implemented.

26. A communication system, comprising a first network device configured to perform the method according to any one of claims 1 to 10, and a second network device configured to perform the method according to any one of claims 11 to 19.
